# EUROPEAN PATENT SPECIFICATION

(11) **EP 2 550 206 B1**
(45) Date of publication and mention of the grant of the patent: **31.07.2019**
(21) Application number: 10848138.3
(22) Date of filing: 01.10.2010
(51) Int. Cl.: B65D 51/00, A61C 5/60, A61C 5/66

(54) **LIQUID CONTAINER**
FLÜSSIGKEITSBEHÄLTER
RÉCIPIENT À LIQUIDE

(30) Priority: 25.03.2010 AU 2010901260
(43) Date of publication of application: 30.01.2013
(73) Proprietor: SDI Limited, Bayswater, VIC 3153 (AU)
(72) Inventor: CHEETHAM, Joshua, James, Windsor, VIC 3181 (AU)
(74) Representative: Minoja, Fabrizio
(86) International application number: PCT/AU2010/001296
(87) International publication number: WO 2011/116408

(56) References cited:
- EP-A2- 1 106 250
- KR-A- 20030 068 109
- US-A- 3 881 627
- US-A- 4 785 953
- US-A- 5 038 958
- US-A- 6 063 038
- US-A1- 2004 157 205
- US-A1- 2005 065 454
- US-A1- 2005 201 813
- US-A1- 2009 320 871
- US-B1- 6 446 827
- US-B2- 7 331 450

## Description

### FIELD OF THE INENTION

The present invention relates to a liquid container.

### PRIOR ART

US 2005/0065454 A1 discloses a blood collection tube with a closure, which is capable of being punctured or pierced with a needle cannula for transferring a biological sample into the tube.

US 6063038 discloses devices for collecting fecal antigen specimens consisting of a screw-top specimen tube and a special screw cap assembly. The screw cap has a hollow "straw" with a specimen collection brush on the end.

US 2009/0320871 A1 discloses a multi-component wiper-applicator mascara package comprising a container holding a first formulation. During use, secondary ingredients contained in the wiper are mixed with the first formulation in the container by means of a barbed tool which separates a bottom seal from the wiper.

US2006/0115315 A1 discloses a tray for dispensing a material, in particular a dental material, to be applied with an applicator having a plurality of applicator support openings and funnel shaped wells containing the material. The wells are permanently opened at the top for receiving the material to be applied.

US 2005/0201813 A1 discloses a unit dose delivery system for a composition made of two or more components. A container includes an outer housing holding a first mass of a first liquid component of the composition and an inner housing with a seal, holding a second mass of a second component of the composition. The inner housing has apertures in a side wall which are normally sealed by interference fit with the outer housing. In use, a rod member is forced downward through a seal causing the inner housing to move downward relative to the outer housing, resulting in the apertures being no longer sealed and causing the mixing of the two components.

### SUMMARY OF THE INVENTION

The invention is defined by the independent claim and preferred embodiments are listed in the dependent claims.

In accordance with one aspect of the present invention there is provided a liquid container comprising an outer wall having an upper end and a lower end, a liquid material receptacle mounted internally of the outer wall adjacent to the upper end thereof, the liquid material receptacle having an open upper end adjacent the upper end of the outer wall, and a closed lower end remote from the upper end of the outer wall, wherein the liquid material receptacle tapers inwardly from the open upper end thereof to the closed lower end, wherein the container is provided with a cap which is arranged to engage with the outer wall adjacent the upper end thereof and is sealed by a membrane which extends across the open end of the liquid material receptacle containing a liquid material between the cap and the upper end of the wall, the membrane being arranged to be broken by a manually inserted applicator through an aperture of the cap into the liquid material, said aperture being surrounded by an internal lip arranged to wipe off excess liquid material from the applicator after withdrawal from the container.

### DESCRIPTION OF THE DRAWINGS

The present invention will now be described, by way of example, with reference to the accompanying drawings, in which:
Figure 1 is a side view of the container of the present invention;

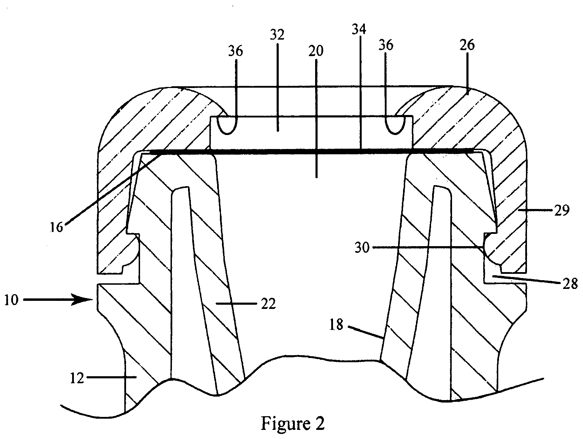

Figure 2 is a partial view of the container of Figure 1 showing an upper part of the container to an enlarged scale; and
Figures 3a to 3d show assembly and use of the container of Figures 1 and 2.

### DETAILED DESCRIPTION OF THE INVENTION

In the drawings there is shown a container 10 comprising an outer circumferential wall 12. The wall 12 has a lower end 14 which is substantially horizontal and which enables the container 10 to rest in stable manner on a flat surface.

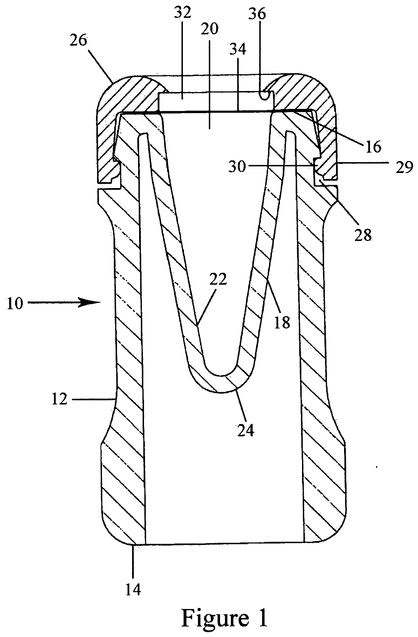

The wall 12 also has an upper end 16. A liquid material receptacle 18 is mounted adjacent to the upper end 16 of the wall 12 internally of the wall 12. Further, the receptacle 18 depends from the upper end 16 as can best be seen in Figure 1. As shown, the receptacle 18 has an open end 20 which is adjacent the upper end 16 and an endless inwardly facing side wall 22 which terminates in a closed end 24 which is remote from the upper end 16.

Further, the container 10 is provided with a cap 26 which is arranged to engage with the outer wall 12 adjacent the upper end 16 thereof.

Further, adjacent the upper end 16 of the wall 12 the container 10 is provided with a circumferential groove 28. Still further, the cap 26 is provided with a downwardly extending circumferential flange 29 which is provided with an internal lip 30. The lip 30 is arranged to engage with the groove 28.

Further, the cap 26 is apertured having a central aperture 32 which is surrounded by an inwardly facing lip 36.

Prior to use the container 10 is sealed by a membrane 34 which is preferably flexible.

This membrane 34 may be a layer of foil. The membrane 34 extends across the open end 20 of the liquid material receptacle 18 between the cap 26 and the upper end 16 of the wall 12. The membrane 34 preferably has a layer of adhesive, usually on an underside thereof, as seen in Figure 1, to ensure sealing engagement with the wall 12. The membrane 34 and the layer of adhesive may be heat sealed to the wall 12 or sealed by other means.

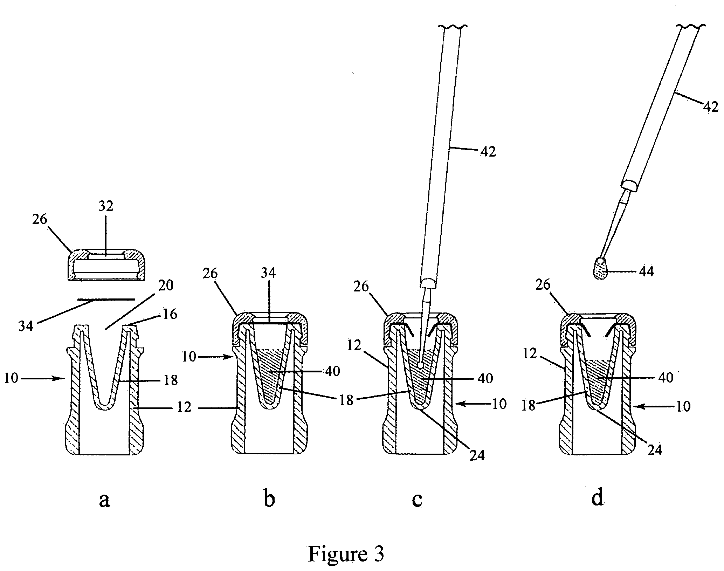

Referring to Figures 3a to 3d there is shown assembly of the container 10 and the use thereof.

In Figure 3a the membrane 34 is being applied to the upper end 16 of the wall 12 followed by the cap 26.
In Figure 3b the container 10 is shown fully assembled and containing a liquid material 40, typically a liquid dental adhesive, in the liquid material receptacle 18.
In Figure 3c it can be seen that the membrane 34 has been broken by an applicator 42 which has been manually inserted through the aperture 32 into the liquid material 40. In Figure 3d there is shown the applicator 42 after withdrawal from the container 10 with a drop of liquid material 44 on a lower end of the applicator 42.

The lip 36 is arranged to wipe off excess liquid material from the applicator 42 after the step of Figure 3d.

Preferably the membrane 34 has a thickness in the range from 0.001mm to 0.2mm, more preferably from 0.005mm to 0.04mm.

The wall 12 enables the container 10 to be held in one hand by a user whilst the other hand can be used for the applicator 42 which may be a brush such as an adhesive brush. The container of the present invention is of general applicability but it is particularly envisaged for use with liquid dental materials such as a dental adhesive.

Modifications and variations in accordance with the appended claims are deemed to be within the scope of the present invention.

## Claims

1. A liquid container comprising an outer wall (12) having an upper end (16) and a lower end (14), a liquid material receptacle (18) mounted internally of the outer wall (12) adjacent to the upper end (16) thereof, the liquid material receptacle (18) having an open upper end (20) adjacent the upper end (16) of the outer wall (12), and a closed lower end (24) remote from the upper end (16) of the outer wall (12), wherein the liquid material receptacle (18) tapers inwardly from the open upper end (20) thereof to the closed lower end (24),
**characterized in that** the container (10) is provided with a cap (26) which is arranged to engage with the outer wall (12) adjacent the upper end (16) thereof and is sealed by a membrane (34) which extends across the open end (20) of the liquid material receptacle (18) containing a liquid material (40) between the cap (26) and the upper end (16) of the wall (12), the membrane (34) being arranged to be broken by a manually inserted applicator (42) through an aperture (32) of the cap (26) into the liquid material (40), said aperture (32) being surrounded by an internal lip arranged to wipe off excess liquid material from the applicator after withdrawal from the container (10).

2. A liquid container according to claim 1, **characterized in that** the lower end (14) of the outer wall (12) is substantially flat and enables the container to rest in stable manner on a flat surface.

3. A liquid container according to claim 1 or 2, **characterized in that** the outer wall (12) extends circumferentially around the liquid material receptacle (18).

4. A liquid container according to any one of the preceding claims, **characterized in that** the liquid material receptacle (18) depends from the mounting thereof to the outer wall.

5. A container according to any one of the preceding claims, **characterized in that** the container (10) is provided adjacent the upper end (16) of the wall (12) with a circumferential groove (28) and the cap (26) is provided with a downwardly extending circumferential flange (29) having an internal lip (30) which engages with the groove (28).

6. A container according to any one of the preceding claims, **characterized in that** said membrane (34) has a thickness in the range from 0.005mm to 0.04mm.

## Patentansprüche

1. Flüssigkeitsbehälter, umfassend eine äußere Wand (12) mit einem oberen Ende (16) und einem unteren Ende (14), einen Flüssigmaterialgefäß (18), welches innerhalb der äußeren Wand (12) angrenzend an ihr oberes Ende (16) gelagert ist, wobei das Flüssigmaterialgefäß (18) ein offenes oberes Ende (20) angrenzend an das obere Ende (16) der äußeren Wand (12) und ein geschlossenes unteres Ende (24) entfernt von dem oberen Ende (16) der äußeren Wand (12) aufweist, wobei sich das Flüssigmaterialgefäß (18) nach innen von dem offenen oberen Ende (20) zu dem geschlossenen unteren Ende (24) verjüngt,
**dadurch gekennzeichnet, dass** der Behälter (10) mit einer Haube (26) versehen ist, die so eingerichtet ist, dass sie mit der äußeren Wand (12) angrenzend an ihr oberes Ende (16) in Eingriff steht, und durch eine Membran (34) abgedichtet ist, die sich über das offene Ende (20) des Flüssigmaterialgefäßes (18) erstreckt, welches ein Flüssigmaterial (40) zwischen der Haube (26) und dem oberen Ende (16) der Wand (12) enthält, wobei die Membran (34) so eingerichtet ist, dass sie von einem manuell durch eine Öffnung (32) der Haube (26) in das flüssige Material (40) eingesetzten Applikator (42) gebrochen wird, wobei die Öffnung (32) von einer inneren Lippe umgeben ist, die so eingerichtet ist, dass sie überschüssiges flüssiges Material nach dem Herausnehmen aus dem Behälter (10) von dem Applikator abwischt.

2. Flüssigkeitsbehälter nach Anspruch 1, **dadurch gekennzeichnet, dass** das untere Ende (14) der äußeren Wand (12) im Wesentlichen flach ist und es dem Behälter ermöglicht, stabil auf einer ebenen Fläche zu ruhen.

3. Flüssigkeitsbehälter nach Anspruch 1 oder 2, **dadurch gekennzeichnet, dass** sich die äußere Wand (12) umlaufend um das Flüssigmaterialgefäß (18) erstreckt.

4. Flüssigkeitsbehälter nach einem der vorstehenden Ansprüche, **dadurch gekennzeichnet, dass** das Flüssigmaterialgefäß (18) von seiner Lagerung davon an der äußeren Wand abhängt.

5. Behälter nach einem der vorstehenden Ansprüche, **dadurch gekennzeichnet, dass** der Behälter (10) angrenzend an das obere Ende (16) der Wand (12) mit einer umlaufenden Nut (28) ausgebildet ist und die Haube (26) mit einem sich nach unten erstreckenden Umfangsflansch (29) ausgebildet ist, der eine Innenlippe (30) aufweist, welche in die Nut (28) eingreift.

6. Behälter nach einem der vorhergehenden Ansprüche, **dadurch gekennzeichnet, dass** die Membran (34) eine Dicke im Bereich von 0,005 mm bis 0,04 mm aufweist.

## Revendications

1. Récipient de liquide comprenant une paroi extérieure (12) présentant une extrémité supérieure (16) et une extrémité inférieure (14), un réceptacle de matériau liquide (18) monté à l'intérieur de la paroi extérieure (12) adjacent à l'extrémité supérieure (16) correspondante, le réceptacle de matériau liquide (18) présentant une extrémité supérieure ouverte (20) adjacente à l'extrémité supérieure (16) de la paroi extérieure (12), et une extrémité inférieure fermée (24) éloignée de l'extrémité supérieure (16) de la paroi extérieure (12), dans lequel le réceptacle de matériau liquide (18) se rétrécit vers l'intérieur depuis l'extrémité supérieure ouverte (20) correspondante vers l'extrémité inférieure fermée (24),
**caractérisé en ce que** le récipient (10) est doté d'un capuchon (26) qui est agencé de manière à se mettre en prise avec la paroi extérieure (12) adjacente à l'extrémité supérieure (16) correspondante et qui est scellé par une membrane (34) qui s'étend à travers l'extrémité ouverte (20) du réceptacle de matériau liquide (18) contenant un matériau liquide (40) entre le capuchon (26) et l'extrémité supérieure (16) de la paroi (12), la membrane (34) étant prévue afin d'être cassée par un applicateur (42) inséré manuellement à travers une ouverture (32) du capuchon (26) dans le matériau liquide (40), ladite ouverture (32) étant entourée d'un rebord interne conçu afin d'essuyer le matériau liquide en excès de l'applicateur après son retrait du récipient (10).

2. Récipient de liquide selon la revendication 1, **caractérisé en ce que** l'extrémité inférieure (14) de la paroi extérieure (12) est sensiblement plate et permet au récipient de s'appuyer de manière stable sur une surface plate.

3. Récipient de liquide selon la revendication 1 ou 2, **caractérisé en ce que** la paroi extérieure (12) s'étend de manière circonférentielle autour du réceptacle de matériau liquide (18).

4. Récipient de liquide selon l'une quelconque des revendications précédentes, **caractérisé en ce que** le réceptacle de matériau liquide (18) dépend de son montage sur la paroi extérieure.

5. Récipient selon l'une quelconque des revendications précédentes, **caractérisé en ce que** le récipient (10) est dotée de manière adjacente à l'extrémité supérieure (16) de la paroi (12) d'une rainure circonférentielle (28) et le capuchon (26) est doté d'une bride circonférentielle (29) s'étendant vers le bas présentant un rebord interne (30) qui se met en prise avec la rainure (28).

6. Récipient selon l'une quelconque des revendications précédentes, **caractérisé en ce que** ladite membrane (34) présente une épaisseur dans la plage comprise entre 0,005 mm et 0,04 mm.
